# EUROPEAN PATENT APPLICATION

(11) **EP 2 028 849 A2**
(43) Date of publication of application: **25.02.2009**
(21) Application number: 08153642.7
(22) Date of filing: 28.03.2008
(51) Int. Cl.: H04N 5/445

(54) **Wireless video system controlled according to control command of external device, wireless video receiver, and method for controlling wireless video system**

(30) Priority: 24.08.2007 KR 20070085534
(71) Applicant: SAMSUNG ELECTRONICS CO., LTD., Suwon-si, Gyeonggi-do 442-742 (KR)
(72) Inventor: Lee, Chang-jin, Gyeonggi-do (KR)
(74) Representative: Clark, David James

(57) **Abstract**

A wireless video system, a wireless video receiver, and a wireless video system controlling method. In the wireless video system, a wireless video transmitter receives a control command from a connected external device and transmits the received control command. The wireless video receiver receives the control command from the wireless video transmitter and is controlled according to the received control command.

## Description

### BACKGROUND OF THE INVENTION

### 1. Field of the Invention

Systems, methods and apparatuses consistent with the present invention relate to wireless video transmission and reception, and more particularly, to a wireless video system which wirelessly transmits a video from a wireless video transmitter to a wireless video receiver, the wireless video receiver, and a wireless video system controlling method.

### 2. Description of the Related Art

With the technological advance of display devices, increasingly thinner display devices are being developed. In response to this, wall-mounted televisions (TVs) are prevalently used to save space.

However, when a set-top box for outputting a video signal is connected to the wall-mounted TV using a cable, the cable attached to the wall does not look good. To address this problem, a wireless TV technique has been developed to wirelessly communicate video signals between the set-top box and the TV.

The set-top box receives a broadcast signal or a video signal from an external device and then wirelessly transmits the received signal to the wall-mounted TV. The wall-mounted TV wirelessly receives the video signal from the set-top box and displays the received video. As such, the wireless TV technique enables elimination of the cable between the wall-mounted TV and the set-top box.

However, when the wall-mounted TV wirelessly communicates with the set-top box, it is quite laborious to power-on the wall-mounted TV and the set-top box individually. In addition, the individual manipulation of remote controllers is required to control the wall-mounted TV and the set-top box.

An external device such as a digital versatile disk recorder (DVDR) and home theater may be connected to the set-top box according to a High Definition Multimedia Interface (HDMI) specification. In this case, the external device needs to be powered-on and to be controlled separately.

However, a user tend to prefer more convenient manipulation in using the video system.

### SUMMARY OF THE INVENTION

Exemplary embodiments of the present invention aim to address at least the above problems and/or disadvantages and other disadvantages not described above.

According to an aspect of the present invention, a wireless video system includes a wireless video transmitter which sends a video to outside and sends a control command which is received from a connected external device; and a wireless video receiver which receives a video from the wireless video transmitter and is controlled according to the control command received from the wireless video transmitter.

The control command may be a power-on command, and the wireless video receiver may be powered on when the power-on command is received from the wireless video transmitter in a standby mode.

The wireless video transmitter may include a radio signal transmitter which sends the video to the wireless video receiver and sends the received control command to the wireless video receiver; and a controller which controls the wireless video transmitter to operate according to the received control command. The radio signal transmitter may be active even when the wireless video transmitter is in the standby mode.

The wireless video receiver may include a radio signal receiver which receives the video from the wireless video transmitter and receives the control command from the wireless video transmitter; and a controller which controls the wireless video receiver to operate according to the received control command. The radio signal receiver may be active even when the wireless video receiver is in a standby mode.

The wireless video transmitter may receive the control command through a cable which is connected to receive a video from the external device.

The wireless video transmitter may be connected to the external device according to an HDMI Consumer Electronics Control (CEC) specification.

When the control command is input from an input device, the external device may send the control command to the video transmitter.

The wireless video transmitter may send the video received from the connected external device to outside, and the wireless video receiver may receive and display the video from the wireless video transmitter.

The wireless video transmitter may send a video received through a broadcasting medium to outside, and the wireless video receiver may receive and display the video from the wireless video transmitter.

The wireless video transmitter may send the received control command by converting the control command in a format for a radio communication.

According to the aspect of the present invention, a method for controlling a wireless video system which comprises a wireless video transmitter which sends a video to outside and a wireless video receiver which receives a video from the wireless video transmitter, includes receiving by the wireless video transmitter a control command from a connected external device; sending by the wireless video transmitter the received control command to the wireless video receiver; receiving by the wireless video receiver the control command from the wireless video transmitter; and operating by the wireless video receiver according to the received control command.

The control command may be a power-on command, the receiving operation of the wireless video receiver may receive the power-on command from the wireless video transmitter in a standby mode, and the controlling operation may power on the wireless video receiver according to the received power-on command.

The transmitting operation of the wireless video transmitter may send the received control command to the wireless video receiver using a radio signal transmitting element which is disposed in the wireless video transmitter, is active even when the wireless video transmitter is in a standby mode, and sends the received control command to the wireless video receiver.

The receiving operation of the wireless video receiver may receive the control command from the wireless video transmitter using a radio signal receiving element which is disposed in the wireless video receiver, is active even when the wireless video receiver is in a standby mode, and receives the control command from the wireless video transmitter.

The receiving operation of the wireless video transmitter may receive the control command through a cable which is connected to receive a video from the external device.

The wireless video transmitter may be connected to the external device according to an HDMI CEC specification.

When the control command is input from an input device, the external device may send the control command to the wireless video transmitter.

The method may further include sending by the wireless video transmitter the video received from the connected external device to outside; and receiving by the wireless video receiver the video from the wireless video transmitter and displaying the received video.

The method may further include sending by the wireless video transmitter a video received through a broadcasting medium; and receiving by the wireless video receiver the video from the wireless video transmitter and displaying the received video.

The method may further include converting by the wireless video transmitter the received control command in a format for a radio communication.

According to another aspect of the present invention, a wireless video system includes a wireless video receiver which receives a video from outside and sends a control command received from a connected external device; and a wireless video transmitter which sends a video to the wireless video receiver and is controlled by the control command received from the wireless video receiver.

According to the aspect of the present invention, a wireless video receiver includes a radio signal receiver which receives a video and a control command from a wireless video transmitter; an output unit which outputs the received video; and a controller which executes the received control command. The control command may be received at the wireless video transmitter from a connected external device.

The control command may be a power-on command, and the controller may control to power on when the power-on command is received in a standby mode.

The radio signal receiver may be active even when the wireless video receiver is in a standby mode.

The control command may be received at the wireless video transmitter from the external device connected according to an HDMI CEC specification.

According to the aspect of the present invention, a wireless video transmitter includes a radio signal transmitter which sends a video to a wireless video receiver and sends a control command received from an external device to the wireless video receiver; and a controller which executes the control command received from the external device.

According to a further aspect of the present invention, a wireless video system includes a wireless video transmitter comprising a radio signal transmitter which sends at least one of a video and a control command to outside; and a wireless video receiver comprising a radio signal receiver which receives at least one of the video and the control command from the wireless video transmitter, and a controller which operates according to the received control command. The radio signal transmitter and the radio signal receiver may be active even when the wireless video transmitter and the wireless video receiver are in a standby mode.

The control command may be received at the wireless video transmitter from a connected external device.

The wireless video transmitter may be connected to the external device according to an HDMI CEC specification.

The control command may be a power-on command, and the wireless video receiver may be powered on when the power-on command is received from the wireless video transmitter in the standby mode.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a wireless video system according to an exemplary embodiment of the present invention;
FIG. 2 is a detailed block diagram of the wireless video system according to an exemplary embodiment of the present invention;
FIG. 3 is a flowchart of a power-on command execution of the wireless video system according to an exemplary embodiment of the present invention; and
FIG. 4 is a block diagram of a wireless video system according to another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

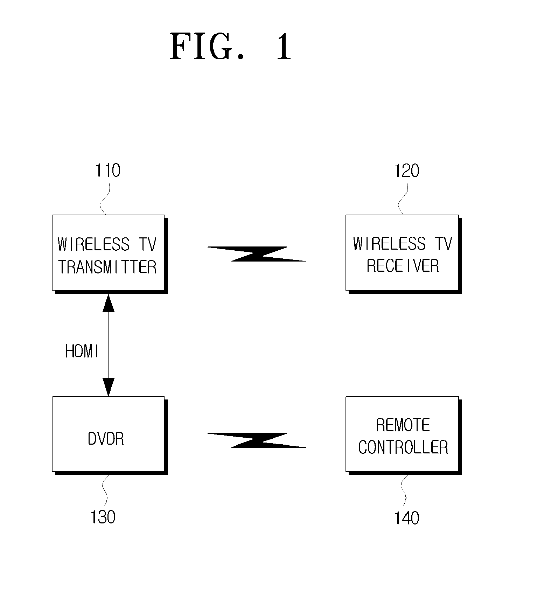

FIG. 1 is a block diagram of a wireless video system according to an exemplary embodiment of the present invention. The video system of FIG. 1 includes a wireless TV transmitter 110, a wireless TV receiver 120, a DVDR 130, and a remote controller 140.

The wireless TV transmitter 110 receives a video signal from a connected external device such as a DVDR, a video cassette recorder (VCR), and a personal video recorder (PVR). The wireless TV transmitter 110 can receive a video signal from a broadcasting medium such as over-the-air, cable, and satellite. The received video signal is wirelessly transmitted from the wireless TV transmitter 110.

The wireless TV transmitter 110 is connected to the DVDR 130 according to a High Definition Multimedia Interface (HDMI) Consumer Electronics Control (CEC) specification. The wireless TV transmitter 110 transmits and receives not only the video signal but also transmits a control signal to and receives from a control signal from the DVDR 130 according to the HDMI CEC specification. For example, when a power-on command is input to the DVDR 130, the DVDR 130 forwards the power-on command to the wireless TV transmitter 110. Accordingly, when a user inputs the power-on command to the DVDR 130 using the remote controller 140, both the DVDR 130 and the wireless TV transmitter 110 are powered on.

The wireless TV transmitter 110 forwards the video signal and a signal relating to the control command to the wireless TV receiver 120. The wireless TV transmitter 110 forwards the control command received from the DVDR 130 to the wireless TV receiver 120 as a radio signal. The wireless TV transmitter 110 may receive a control command from the wireless TV receiver 120.

The wireless TV receiver 120 can wirelessly receive the video signal from wireless TV transmitter 110 as well as wirelessly transmit the control signal to and wirelessly receive the control signal from the wireless TV transmitter 110. For example, when the wireless TV transmitter 110 transmits the power-on command received from the DVDR 130, the wireless TV receiver 120 receives the power-on command and executes the power-on. Hence, when the user inputs the power-on command to the DVDR 130 through the remote controller 140, all of the DVDR 130, the wireless TV transmitter 110, and the wireless TV receiver 120 are powered on.

The wireless TV receiver 120 sends a control command to the wireless TV transmitter 110. In detail, the video signal is communicated from the wireless TV transmitter 110 to the wireless TV receiver 120 in one direction, whereas the control command signal can be communicated between the wireless TV transmitter 110 and the wireless TV receiver 120 in two directions.

The wireless TV transmitter 110 and the wireless TV receiver 120 wirelessly transmit and receive the control command. The wireless communication is carried out using radio frequency (RF) signals. In particular, the wireless TV transmitter 110 receives the control command of the HDMI CEC specification from the DVDR 130, converts the received control command to a format suitable for the radio communication, and sends the converted signal to the wireless TV receiver 120.

The DVDR 130 can record the input video in a DVD or output a video signal recorded in the DVD to the external device. The DVDR 130 forwards the control signal input through the remote controller 140 to the external device connected according to the HDMI CEC specification. For example, when the wireless TV transmitter 110 is connected to the DVDR 130 according to the HDMI CEC specification and the power-on command is input to the DVDR 130, the DVDR 130 forwards the input power-on command to the wireless TV transmitter 110.

The remote controller 140 receives a command for controlling the DVDR 130 input by the user and sends the input control command to the DVDR 130.

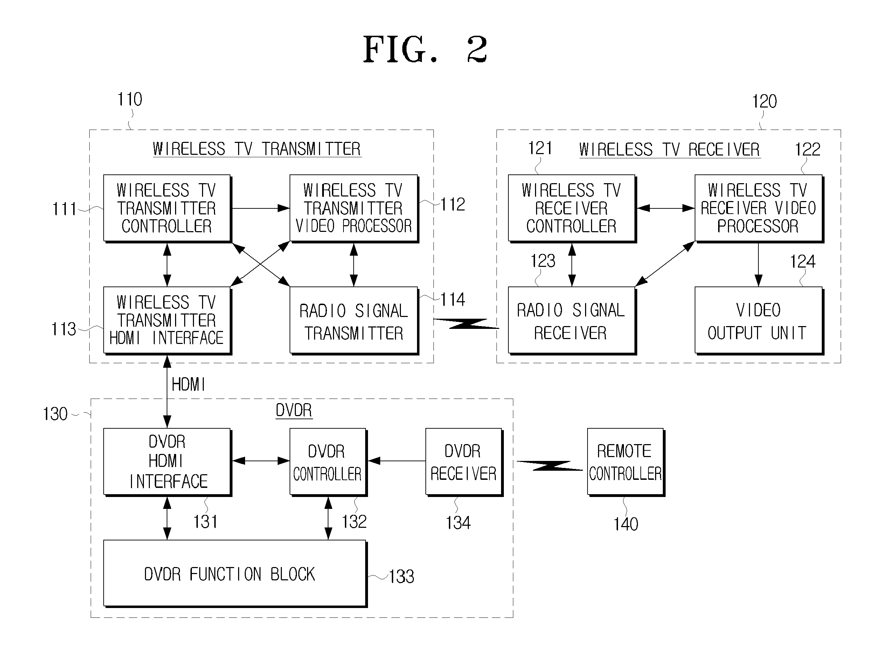

The video system will be explained in more detail by referring to FIG. 2 which is a detailed block diagram of the wireless video system according to an exemplary embodiment of the present invention.

The wireless TV transmitter 110 comprises a wireless TV transmitter controller 111, a wireless TV transmitter video processor 112, a wireless TV transmitter HDMI interface 113, and a radio signal transmitter 114.

The wireless TV transmitter controller 111 controls overall operation of the wireless TV transmitter 110. The wireless TV transmitter controller 111 controls the wireless TV transmitter 110 to operate according to the control command received from the DVDR 130. For example, upon receiving the power-on command from the DVDR 130, the wireless TV transmitter controller 111 controls to power on the wireless TV transmitter 110.

The wireless TV transmitter controller 111 controls the radio signal transmitter 114 to process the control command input from the DVDR 130 and send the processed control command to the wireless TV receiver 120.
In further detail, the wireless TV transmitter controller 111 converts and processes the control command received from the DVDR 130 into a format suitable for the radio communication between the wireless TV transmitter 110 and the wireless TV receiver 120. Next, the wireless TV transmitter controller 111 provides the processed control command to the radio signal transmitter 114.

The wireless TV transmitter video processor 112 processes the video signal received from the external device or the broadcasting medium. In particular, the wireless TV transmitter video processor 112 converts the video signal to the format suitable for the radio communication. Next, the wireless TV transmitter video processor 112 provides the processed video signal to the radio signal transmitter 114.

The wireless TV transmitter HDMI interface 113 receives video from the DVDR 130 connected according to the HDMI CEC specification. The wireless TV transmitter HDMI interface 113 can exchange the control command with the connected DVDR 130.
The radio signal transmitter 114 sends the video signal processed at the wireless TV transmitter video processor 114 to the wireless TV receiver 120. The radio signal transmitter 114 transmits the control signal processed by the wireless TV transmitter controller 111 to the wireless TV receiver 120. For example, the radio signal transmitter 114 can transmit the power-on command received from the DVDR 130 to the wireless TV receiver 120.

The radio signal transmitter 114 is active even when the wireless TV transmitter 110 is in a standby mode. Herein, the standby mode of the wireless TV transmitter 110 signifies that a power plug of the wireless TV transmitter 110 is connected to a power source (that is, the power is supplied) but the wireless TV transmitter 110 is still powered off. When the radio signal transmitter 114 is active even in the standby mode, the wireless TV transmitter 110 can transmit the control signal to and receive the control signal from the wireless TV receiver 120 even in the standby mode.

The wireless TV receiver 120 of FIG. 2 comprises a wireless TV receiver controller 121, a wireless TV receiver video processor 122, a radio signal receiver 123, and a video output unit 124.

The wireless TV receiver controller 121 controls overall operation of the wireless TV receiver 120. The wireless TV receiver controller 121 controls the wireless TV receiver 120 to operate according to the control command received from the wireless TV transmitter 110. For example, upon receiving the power-on command from the wireless TV transmitter 110, the wireless TV receiver controller 121 controls to power on the wireless TV receiver 120.

The wireless TV receiver video processor 122 processes the video signal received from the wireless TV transmitter 110. In further detail, the wireless TV transmitter video processor 122 performs the video decoding, the scaling, and the audio decoding on the video signal. Next, the wireless TV receiver video processor 122 provides the processed video signal to the video output unit 124.

The radio signal receiver 123 receives the video signal from the wireless TV transmitter 110. The radio signal receiver 123 transmits the control command to and receives the control command from the wireless TV transmitter 110. For example, the radio signal receiver 123 receives the power-on command from the wireless TV transmitter 110 and forwards the received power-on command to the wireless TV receiver controller 121.

The radio signal receiver 123 is active even when the wireless TV receiver 120 is in the standby mode. When the radio signal receiver 123 is active even in the standby mode, the wireless TV receiver 120 can exchange the control signal with the wireless TV transmitter 110 in the standby mode.

For example, since the radio signal receiver 123 is active even when the wireless TV receiver 120 is in the standby mode, the radio signal receiver 123 is able to receive the power-on command from the wireless TV transmitter 110. In response to the received power-on command, the wireless TV receiver 120 is powered on.

The video output unit 124 displays the video signal processed by the wireless TV receiver video processor 122 on a display (not shown), or outputs the processed video signal to a connected external device (e.g., an external TV) through an external output port.

The DVDR 130 of FIG. 2 comprises a DVDR HDMI interface 131, a DVDR controller 132, a DVDR function block 133, and a DVDR receiver 134. The DVDR 130 receives the control command input from the user through the remote controller 140.

The DVDR function block 133 executes the proper functions of the DVDR 130. In particular, the DVDR function block 133 records the broadcast signal received from the wireless TV transmitter 110 through the DVDR HDMI interface 131 to a DVD, or reads a video signal from the DVD and provides the read video signal to the wireless TV transmitter 110 through the DVDR HDMI interface 131.

The DVDR HDMI interface 131 is connected to the wireless TV transmitter 110 according to the HDMI CEC specification to exchange the video signal and the control command between the wireless TV transmitter 110 and the DVDR 130.

The DVDR controller 132 controls the operations of the DVDR function block 133 according to the control command received from the remote controller 140.

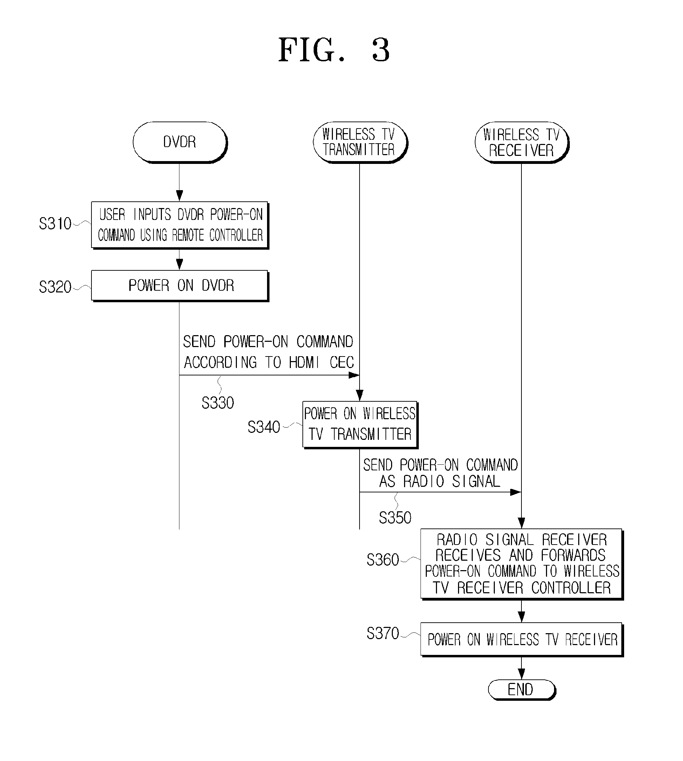

The execution of the power-on command of the control commands in the video system will be described in detail by referring to FIG. 3 which is a flowchart of the power-on command execution of the wireless video system according to an exemplary embodiment of the present invention.

Referring to FIG. 3, the user inputs the power-on command of the DVDR 130 using the remote controller 140 (S310). The DVDR 130 is powered on according to the input power-on command (S320). In more detail, the DVDR receiver 134 receives the power-on command from the remote controller 140. Next, the DVDR controller 132 controls the DVDR function block 133 to execute the received power-on command.

The DVDR 130 sends the power-on command to the wireless TV transmitter 110 according to the HDMI CEC specification (S330). In particular, the DVDR HDMI interface 131 sends the power-on command to the wireless TV transmitter HDMI interface 113 according to the HDMI CEC specification.

The wireless TV transmitter 110 executes the received power-on command (S340). In particular, the wireless TV transmitter HDMI interface 113 transmits the power-on command to the wireless TV transmitter controller 111. The wireless TV transmitter controller 111 controls to power on the wireless TV transmitter 110.

Next, the wireless TV transmitter 110 sends the power-on command to the wireless TV receiver 120 as the radio signal (S350). That is, the wireless TV transmitter 110 forwards the power-on command received from the DVDR 130 through the radio signal transmitter 114 to the wireless TV receiver 120.

The radio signal receiver 123 receives the power-on command and forwards the received power-on command to the wireless TV receiver controller 121 (S360). In doing so, even when the wireless TV receiver 120 is in the standby mode, the radio signal receiver 123 is suitably active in order to receive the power-on command from the wireless TV transmitter 110.

The wireless TV receiver controller 121 controls to power on the wireless TV receiver 120 according to the received power-on command (S370).

Thus, the wireless TV receiver 120 can receive the power-on command received from the DVDR 130 via the wireless TV transmitter 110.

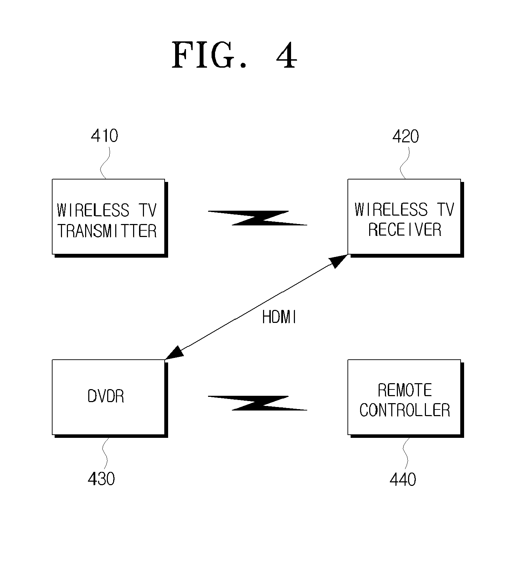

An exemplary case where a wireless TV receiver 420 is connected to a DVDR 430 according to the HDMI CEC specification will be explained by referring to FIG. 4 which is a block diagram of a wireless video system according to another exemplary embodiment of the present invention.

Although the video system of FIG. 4 has the same structure as the video system of FIG. 1, a difference lies in that the wireless TV receiver 420 is connected to the DVDR 430 according to the HDMI CEC specification. Accordingly, description the same parts in FIG. 1 shall be omitted for brevity.

According to another exemplary embodiment of the present invention, when the user inputs a control command to the DVDR 430 using a remote controller 440, the DVDR 430 forwards the control command to the wireless TV receiver 420 connected according to the HDMI CEC specification. Next, the wireless TV receiver 420 sends the control command received from the DVDR 430 to a wireless TV transmitter 410. The wireless TV transmitter 410 operates according to the received control command. As indicated above, since the wireless TV transmitter 410 and the wireless TV receiver 420 can bi-directionally exchange the signals of the control command, the wireless TV receiver 420 can send the control command to the wireless TV transmitter 410.

For example, when the user inputs a power-on command to the DVDR 430 using the remote controller 440, the DVDR 430 is powered on and the power-on command is forwarded to the wireless TV receiver 420. The wireless TV receiver 420 is powered on according to the received power-on command and then sends the power-on command to the wireless TV transmitter 410. In doing so, since a radio signal transmitter (not shown) of the wireless TV transmitter 410 is active even when the wireless TV transmitter 410 is in the standby mode, it can receive the power-on command from the wireless receiver 420. After receiving the power-on command, the wireless TV transmitter 410 is powered on according to the power-on command.

As described above, the video system can be implemented such that the wireless TV receiver 420 receives the control command from the DVDR 430, the wireless TV receiver 420 forwards the received control command to the wireless TV transmitter 410, and the wireless TV transmitter 410 is controlled according to the received control command.

While the power-on command of the control commands is described as an example, the present invention is applicable to other control command. For example, the present invention is applicable to control signals such as power-off command or volume adjustment command.

While the wireless TV transmitter 110 receives the control command from the DVDR 130 by way of example, the wireless TV transmitter 110 may generate a control command by detecting the status change of the DVDR 130. For example, when the wireless TV transmitter 110 detects the connection to the DVDR 130 or the video input from the DVDR 130, the wireless TV transmitter 110 can generate and transmit a power-on command to the wireless TV receiver 120.

While the input device of the DVDR 130 is the remote controller 140 by way of example, the control command may be input using other input device. For example, the control command can be input using key buttons installed in the DVDR 130.

Although it has been described that the DVDR 130 is connected to the wireless TV transmitter 110 according to the HDMI CEC specification, the DVDR 130 may be connected to the wireless TV transmitter 110 according to another specification.

While the connected external device is the DVDR by way of example, other video devices can be connected. For example, the connected external device may be a PVR, a home theater, a VCR, and a game console.

As set forth above according to example embodiments of the present invention, the video system controlled by the control command received from the external device, the wireless video receiver, and the wireless video system controlling method enable the user to control the video system more easily.

In particular, as the power-on command is input to the external device, such as DVDR, connected according to the HDMI specification, the wireless video transmitter and the wireless video receiver are also powered on. Therefore, the user can turn on the video system more easily.

Further, as the control command is input to the external device, such as DVDR, connected according to the HDMI, the wireless video transmitter and the wireless video receiver are also controlled together. Therefore, the user can control the video system far more easily.

The foregoing exemplary embodiments and advantages are merely exemplary and are not to be construed as limiting the present invention. The present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless video system comprising:
a wireless video transmitter (110) which transmits a video signal and a control command which is received from a external device (130) which is connected to the wireless video transmitter; and
a wireless video receiver (120) which receives the video signal and the control command from the wireless video transmitter (110) and is controlled according to the control command.

2. The wireless video system of claim 1, wherein the control command is a power-on command, and
the wireless video receiver (120) is powered on in response to the power-on command, when the power-on command is received from the wireless video transmitter (110) while the wireless video receiver (120) is in a standby mode.

3. The wireless video system of claim 1 or 2, wherein the wireless video transmitter (110) comprises:
a radio signal transmitter (114) which transmits the video signal and the received control command to the wireless video receiver (120); and
a controller (111) which controls the wireless video transmitter (110) to operate according to the received control command, and
wherein the radio signal transmitter (114) is active even when the wireless video transmitter (110) is in a standby mode.

4. The wireless video system of claim 1, 2 or 3, wherein the wireless video receiver (120) comprises:
a radio signal receiver (123) which receives the video signal and the control command from the wireless video transmitter (110); and
a controller (121) which controls the wireless video receiver (120) to operate according to the received control command,
wherein the radio signal receiver (123) is active even when the wireless video receiver (120) is in a standby mode.

5. The wireless video system of any preceding claim, wherein the wireless video transmitter (110) receives the control command and the video signal through a cable which is connected to the external device (130).

6. The wireless video system of claim 5, wherein the wireless video transmitter (110) is connected to the external device (130) according to a High Definition Multimedia Interface Consumer Electronics Control specification.

7. The wireless video system of any preceding claim, wherein, when the control command is input from an input device (140), the external device (130) transmits the control command to the video transmitter (110).

8. The wireless video system of any preceding claim, wherein the wireless video transmitter (110) receives the video signal from the connected external device (130), and
the wireless video receiver (120) displays the video signal received from the wireless video transmitter (110).

9. The wireless video system of any one of claims 1-7, wherein the wireless video transmitter (110) receives the video signal through a broadcasting medium, and
the wireless video receiver (120) displays the video signal received from the wireless video transmitter (110).

10. The wireless video system of any preceding claim, wherein the wireless video transmitter (110) converts the control command received from the external device (130) into a format for a radio communication prior to transmitting the control command.

11. A method for controlling a wireless video system which comprises a wireless video transmitter (110) which transmits a video signal and a wireless video receiver (120) which receives the video signal from the wireless video transmitter (110), the method comprising the steps of:
(a) receiving by the wireless video transmitter a control command from a connected external device (130);
(b) transmitting by the wireless video transmitter (110) the received control command to the wireless video receiver (120);
(c) receiving by the wireless video receiver (120) the control command from the wireless video transmitter (110); and
(d) operating the wireless video receiver (120) according to the received control command.

12. The method of claim 11, wherein the control command is a power-on command,
step (a) comprises receiving the power-on command from the wireless video transmitter (110) in a standby mode, and
step (d) comprises powering on the wireless video receiver (120) according to the received power-on command.

13. The method of claim 11 or 12, wherein step (b) comprises transmitting the received control command to the wireless video receiver (120) via a radio signal transmitter which is included in the wireless video transmitter (110), and the radio signal transmitter is active and transmits the control command to the wireless video receiver (120) even when the wireless video transmitter (110) is in a standby mode.

14. The method of claim 11, 12 or 13, wherein step (c) comprises receiving the control command from the wireless video transmitter (110) via a radio signal receiver which is included in the wireless video receiver (120), and the radio signal receiver is active and receives the control command even when the wireless video receiver (120) is in a standby mode.

15. The method of claim 11, 12 or 13, wherein step (c) comprises receiving the control command via a cable which is connected to the external device (130) and through which the wireless video receiver (120) receives the video signal.

16. The method of claim 15, wherein the wireless video transmitter (110) is connected to the external device (130) according to a High Definition Multimedia Interface Consumer Electronics Control specification.

17. The method of any one of claims 11-16, further comprising inputting the control to the external device (130) via an input device and transmitting the control command from the external device (130) to the wireless video transmitter (110).

18. The method of any one of claims 11-17, further comprising:
transmitting by the wireless video transmitter the video signal received from the connected external device (130); and
receiving by the wireless video receiver (120) the video signal from the wireless video transmitter (110) and displaying the received video signal.

19. The method of any one of claims 11-18, further comprising:
transmitting by the wireless video transmitter (110) the video signal, wherein wireless video transmitter (110) receives the video signal through a broadcasting medium; and
displaying by the wireless video receiver (120) the received video signal.

20. The method of any one of claims 11-14, further comprising:
converting by the wireless video transmitter (110) the received control command into a format for a radio communication.

21. A wireless video receiver comprising:
a radio signal receiver (123) which receives a video signal and a control command from a wireless video transmitter (110);
an output unit (124) which outputs the received video signal; and
a controller (121) which executes the received control command,
wherein the control command is received at the wireless video transmitter (110) from a connected external device (130).

22. The wireless video receiver of claim 21, wherein the control command is a power-on command, and
the controller (121) controls the wireless video receiver (120) to power-on when the power-on command is received while the wireless video receiver (120) is in a standby mode.

23. The wireless video receiver of claim 21 or 22, wherein the radio signal receiver (123) is active even when the wireless video receiver (120) is in a standby mode.

24. A wireless video transmitter comprising:
a radio signal transmitter (114) which transmits a video signal to a wireless video (110) receiver and transmits a control command received from an external device (130) to the wireless video receiver (120); and
a controller (111) which executes the control command received from the external device (130).

25. A wireless video system comprising:
a wireless video transmitter (110) comprising a radio signal transmitter (114) which transmits a video signal and a control command; and
a wireless video receiver (120) comprising a radio signal receiver (123) which receives the video signal and the control command from the wireless video transmitter (110), and a controller (121) which operates according to the received control command,
wherein the radio signal transmitter (114) is active even when the wireless video transmitter (110) is in a standby mode, and the radio signal receiver (123) is active even when the wireless video receiver (120) is in a standby mode.
